# EUROPÄISCHE PATENTANMELDUNG

(11) **EP 2 431 160 A1**
(43) Veröffentlichungstag der Anmeldung: **21.03.2012**
(21) Anmeldenummer: 10014235.5
(22) Anmeldetag: 03.11.2010
(51) Int. Cl.: B29C 70/20

(54) **Verstärkungsfasergelege und Vorrichtung zu deren Herstellung**

(30) Priorität: 15.09.2010 DE 102010045424
(71) Anmelder: Szukat, Klaus, 03792 Parcent (Alicante) (ES); Scholten, Fritz, Sausalito, CA 94965 (US)
(72) Erfinder: Szukat, Klaus, 03792 Parcent (Alicante) (ES); Scholten, Fritz, Sausalito, CA 94965 (US)
(74) Vertreter: Demski, Siegfried

(57) **Zusammenfassung**

Die Erfindung betrifft Verstärkungsfasergelege 20, bestehend aus mehrlagigen MD-Gelegen (Multiaxial-Gelege) 10, 11, 12, welche jeweils aus einzelnen nebeneinander angeordneten Fasern in einer Lage bestehen, wobei zumindest zwei Lagen einen Winkel zueinander in der Lagenebene aufweisen und mit einem Fixiermittel verbunden sind. Um die Verarbeitung der multiaxialen Gelege 10, 11, 12 zu verbessern und die Weiterverarbeitungszeit deutlich zu reduzieren wird zur Herstellung von komplexen Karbonteilen vorgeschlagen, dass zumindest zwei vorgefertigte MD-Gelege 10, 11, 12 unter einem Winkel in der Lagenebene zueinander angeordnet und miteinander verbunden sind. Somit wird ein Verstärkungsfasergelege 20 bereitgestellt, welches zumindest zwei, bei einer 0° Lage der einzelnen MD-Gelege 10, 11, 12 von sechs Einzelfasergelegen aufweist. Die Anzahl der übereinander angeordneten MD-Gelege 10, 11, 12 kann hierbei beliebig erhöht werden, sodass bereits bei der Fertigung der Verstärkungsfasergelege 20 ein erhöhter Schichtaufbau vorliegt, der besonders vorteilhaft durch Verformung und Ausharzen weiter verarbeitet werden kann.

## Beschreibung

MD-Gelegen (Multiaxial-Gelege), welche jeweils aus einzelnen nebeneinander Die Erfindung betrifft ein Verstärkungsfasergelege, bestehend aus mehrlagigen angeordneten Fasern in einer Lage bestehen, wobei zumindest zwei Lagen einen Winkel zueinander in der Lagenebene aufweisen und mit einem Fixiermittel verbunden sind.

Sogenannte Multiaxialgelege, bestehend aus beispielsweise Kohlenstofffasern werden überall dort eingesetzt, wo extreme Zugfestigkeiten notwendig sind und ein möglichst geringes Gewicht vorhanden sein soll. Aus diesem Grunde werden Multiaxialgelege für die vorgesehenen Bauteile nach ihrer Fertigstellung in eine Form eingebracht und diese anschließend mit einem Kunstharz, beispielsweise Epoxydharz, ausgegossen. Somit können Werkstücke hergestellt werden, die einstückig eine beliebige Form einnehmen können. Durch die verwendeten Fasern wird hierbei eine Festigkeit erreicht die anderen Werkstoffen weit überlegen ist. Durch die besondere Eigenschaft der Kohlenstofffasem können die Festigkeitseigenschaften deutlich erhöht werden, sodass die Multiaxialgelege in immer größer werdenden Bereichen eingesetzt werden können. Typische Einsatzbeispiele sind Bootsrümpfe sowie Ein- und Aufbauten im Boots- und Schiffbau. Des Weiteren können die Multiaxialgelege für Tragflächen-, Leitwerksbeplankungen und Rumpfschalen im Flugzeugbau eingesetzt werden. Selbst für Helikopter können die Multiaxialgelege für den Bau der Rotorblätter eingesetzt werden. Darüber hinaus besteht die Möglichkeit im Fahrzeugbau, umfangreiche Teile der Fahrzeugkomponenten durch geformte Bauteile zu ersetzen, die aus verharzten Mulitaxialgelegen bestehen.

Durch die hohe Strukturfestigkeit bei geringem Bauteilgewicht lässt sich somit insbesondere im Fahrzeug- und Flugzeugbau eine Reihe von Vorteilen erzielen, die beispielsweise darin bestehen, dass aufgrund des geringen Eigengewichtes größere Zuladungsmengen bei verringerten Kraftstoffverbrauch zu einer größeren Wirtschaftlichkeit führen. Der Einsatz der Multiaxialgelege stellt insofern einen echten Beitrag zur Lösung von ökologischen und Ökonomieproblemen dar.

Aufgrund der Tatsache, dass in einigen Fällen eine vorgegebene Materialstärke eingehalten werden muss, besteht die Notwendigkeit eine Vielzahl von Multiaxialgelegen übereinander anzuordnen. Hierzu ist es bisher bekannt ein Multiaxialgelege in der Weise herzustellen, dass zwei einzelne Gelege, welche aus einzeln nebeneinander angeordneten Fasern in einer Lage bestehen, unter einem Winkel von beispielsweise 45° zusammenzulegen oder zu wickeln. Alternativ besteht die Möglichkeit zu den beiden + -45° Lagen zusätzlich eine 0° Lage in Längsrichtung des Multiaxialgeleges anzuordnen. Bekannt ist hierzu die einzelnen zusammengelegten Multiaxialgelege mittels einer Nähtechnik oder eine Klebetechnik zu verbinden. Soweit die Multiaxialgelege miteinander vernäht werden, sind Spezialmaschinen erforderlich, welche für das Vernähen einen erheblichen Zeitaufwand benötigen. Als weiterer Nachteil hat sich hierbei herausgestellt, und zwar für die spätere Nutzung, dass die fertigungstechnisch bedingten Lücken zwischen den zu vernähenden Gelege zu einer Instabilität der vernähten Fläche führt. Dieser Nachteil ergibt sich dann nicht, wenn die einzelnen Fasern ohne Lücken nebeneinander angeordnet sind und durch Klebefäden oder ein Klebegitter miteinander verbunden werden, sodass diese sich in der einmal festgelegten Positionen nicht mehr verschieben können. Hierdurch entstehen in der Regel jedoch dichte Fasernetze, welche nur schwer von dem einzubringenden Harz durchdrungen werden können. Andererseits ist festgestellt worden, dass durch die Einstichkanäle beim Vernähen Lücken zwischen den einzelnen Fasern entstehen, welche ein Eindringen des Harzes verbessern. Sicherlich dürfte im Abhängigkeit der späteren Verwendung eine Kombination beider Verfahren sinnvoll sein, um einerseits die erforderlichen Festigkeitswerte zu erzielen aber gleichzeitig sicherzustellen, dass die verwendeten Harzstoffe in sämtliche Lagen der Gelege eindringen können. Alternativ kann je nach Verwendungszweck die eine oder andere Variante verwendet werden.

Die Herstellung der multiaxialen Gelege kann durch eine Schneid/Legetechnik erfolgen, aber ebenso durch eine Wickeltechnik, in dem zumindest zwei zulaufende Faserbündel um beispielsweise einen Wickelwinkel von +-45° gegeneinander aufgewickelt werden. Hierzu besteht die Möglichkeit die einzelnen Gelege mit Haftfäden oder Haftgittern zu versehen, sodass die auf das erste Gelege abgelegten weiteren Fasern mit diesen verbunden werden.

Die vorgenannten Verfahren ermöglichen es somit ein multiaxiales Gelege herzustellen, welches in der Regel aus zwei Einzellagen oder gegebenenfalls drei Lagen besteht und als MD-Gelege bezeichnet wird. Aufgrund der vorhandenen Dicke des MD-Geleges sind eine Vielzahl von einzelnen Arbeitsschritten erforderlich, die einerseits sorgfältig ausgeführt werden müssen und andererseits sehr zeitaufwändig sind, um die gewünschten Lagenstärke und Vorteile zu erzielen.

Der Erfindung liegt die Aufgabe zugrunde, die Verarbeitung der multiaxialen Gelege zu verbessern und die Weiterverarbeitungszeit deutlich zu reduzieren.

Erfindungsgemäß ist zur Lösung der Aufgabe vorgesehen, dass zumindest zwei vorgefertigte MD-Gelege unter einem Winkel in der Lagenebene zueinander angeordnet und miteinander verbunden sind. Weitere vorteilhafte Ausgestaltungen der Erfindung ergeben sich aus den Unteransprüchen.

Um die weitere Verarbeitung der multiaxialen Gelege zu vereinfachen und die einzelnen erforderlichen Arbeitsschritte deutlich zu reduzieren geht die Erfindung davon aus, mehrere MD-Gelege unter einem Winkel in der Lagenebene anzuordnen und miteinander zu verbinden, sodass ein mehrlagiges Gelege entsteht, welches einerseits die bereits bestehenden Vorteile eines MD-Geleges einfacher Gattung erhöht und darüber hinaus die Festigkeitswerte durch die verschiedenen sich kreuzenden MD-Gelege weiter erhöht. Dadurch, dass bereits mehrere Multiaxialgelege übereinander liegend angeordnet und miteinander verbunden sind, besteht die Möglichkeit den weiteren Verarbeitungsprozess erheblich zu verkürzen. Die so zur Verfügung stehenden Verstärkungsfasergelege können zum Teil direkt verwendet werden oder falls eine vorgegebene Materialstärke erforderlich ist, in entsprechende Anzahl übereinander gelegt und miteinander verbunden werden, sodass die Verstärkungsfasergelege nur noch in die gewünschte Form gebracht werden müssen, um anschließend durch ein Harz verfestigt zu werden.

Aus diesem Grunde ist in weiterer Ausgestaltung der Erfindung vorgesehen, dass zwei oder mehrere MD-Gelege auf die vorgeschriebene Art und Weise übereinander gelegt und miteinander verbunden werden. Durch die Wahl eines Wickelwinkels von beispielsweise + -45°, gegebenenfalls 0°/90° und + -45° weist hierbei jedes einzelne MD-Gelege bereits die erforderlichen Festigkeitswerte auf, welche nahezu richtungs-unabhängig vorliegen. Wenn im Weiteren die einzelnen MD- Gelege unter einem Winkel von beispielsweise + -45° zueinander angeordnet werden, erfolgt eine Ausrichtung der einzelnen Fasern innerhalb des Verstärkungsfasergeleges mit mehreren Vorzugsrichtungen, sodass das Zugfestigkeitsverhalten positiv beeinflusst wird. Sollte es zum Einsatz mehrerer MD-Gelege gekommen, können hierbei selbstverständlich einzelne Lagen eine gleiche Richtung einnehmen, wobei diese in der Regel alternierend zu weiteren Lagen angeordnet werden und den gesamten Verstärkungsfasergelege auch über die Dicke verteilt annähernd gleiche Zugfestigkeitseigenschaften verleiht. Im einfachsten Fall wird das Verstärkungsfasergelege aus zwei MD-Gelegen unter einem Winkel von 45° zueinander aus zwel MD-Gelegen gefertigt. Alternativ besteht die Möglichkeit ein unteres MD-Gelege mit +- 45° mit einem weiteren MD-Gelege 0°/90° und einem oberen MD-Gelege +- 45° zusammen zu legen. Somit entstehen insgesamt 6 Einzellagen. Für den Fall das mehrere dieser Verstärkungsfasergelege übereinander angeordnet werden müssen, um eine entsprechende Dicke zu erzielen, kann zur Vermeidung, dass zwei identische Lagen unmittelbar aufeinander zu liegen kommen, ein Verstärkungsfasergelege mit insgesamt 4 MD-Gelegen zum Einsatz kommen. Die Anordnung erfolgt hierbei in derart, dass die unterste Lage aus einem +- 45° MD-Gelege besteht, darauf ein 0°/90° MD-Gelege aufgebracht wird und sodann nochmals ein MD-Gelege mit +- 45°, auf welches wiederum ein MD-Gelege 0°/90° aufgelegt wird. Dieses Verstärkungsfasergelege mit insgesamt 4 MD-Gelegen kann somit beliebig mit weiteren Verstärkungsfasergelegen kombiniert werden, ohne das zwei identische MD-Gelege aufeinander zu liegen kommen.

Die einzelnen Faserrichtungen können hierbei wie folgt klassifiziert werden. Im einfachsten Fall bei einer 0° Lage ist von einem uniaxialen Gelege auszugehen. Soweit zwei Gelege um jeweils 45° zueinander angeordnet, beispielsweise aufgewickelt oder abgelegt werden, entsteht ein biaxiales Gelege. Soweit zu dem biaxialen Gelege eine Lage unter 0° oder gegebenenfalls 90° hinzu kommt, liegt eine triaxiales Gelege vor. Werden mehrere MD-Gelege unter 45° übereinander angeordnet, kann je nach Anzahl der verwendeten Lagen von einem quadraxialen Gelege oder einem hexaxialen Gelege ausgegangen werden. Das quadraxiale Gelege weist hierbei zwei Lagen MD-Gelege mit insgesamt zumindest vier Lagen auf, während hingegen das hexaxiale Gelege drei MD-Gelege mit insgesamt zumindest sechs Lagen aufweist. Soweit die einzelnen MD-Gelege eine 0° Lage aufweisen, erhöht sich die Lagenzahl auf 6 beziehungsweise 9.

Die Erfindung betrifft insofern ein mehrlagiges Verstärkungsfasergelege, welches im Wesentlichen aus gewickelten multidirektionalen zweilagigen MD-Gelegen von + -45° besteht, die mit ähnlichen MD-Gelegen unter einem Winkel von beispielsweise + 45° bis - 45° oder 0° bis 90° kombiniert werden. Beispielsweise können auf diese Weise die oben genannten Verstärkungsfasergelege mit drei oder vier MD-Gelege übereinander unter +45°, 0°/90° und - 45° oder +45°, 0°/90°. -45° und 0°/90°angeordnet werden, sodass insgesamt sechs beziehungsweise acht Lagen gemäß den vorgenannten Angaben eines hexaxialen Geleges vorliegen. Werden beispielsweise 3-lagige MDs als Vorprodukt verwandt (+45°/0°/-45°), so ergibt sich bei einer ersten Lage in Längsrichtung, einer zweiten Lage in Querrichtung, einer dritten Lage in Längsrichtung und einer vierten Lage in Querrichtung eine Gesamtlagenzahl mit +45°/0°-45°, 0°/45°/90°, +45°/0°/45° und 0°/45°/90°. Aus dem Vorbeschriebenen sind weitere Varianten ableitbar.

Vorzugsweise können diese Lagen hierbei jedoch in einem einzelnen Arbeitsgang hergestellt werden und müssen nicht nach Fertigstellung der MD-Gelege zu einem weiteren Arbeitsschritt führen. Der besondere Vorteil dieser Verstärkungsfasergelege besteht darin, dass nach erfolgter Herstellung die entstehenden Zugkräfte deutlich besser aufgenommen werden als bei einfachen UD-Gelegen oder MD-Gelegen, weil eine flächige, quasi isotrope, Stabilität vorhanden ist. Des Weiteren werden randseitige Ausfransungen vermieden, wobei die Möglichkeit besteht die seitlichen Kanten nach der Herstellung des Verstärkungsfasergeleges zu beschneiden, sofern gewünscht.

Zur Fixierung der einzelnen Faserlagen gegeneinander werden Haftfadengitter, Sprühkleber oder Pulverkleber verwendet, welche warmklebend, warmschmelzend oder bei der weiteren Bearbeitung in der Aushärtung sich auflösend die einzelnen Fasern miteinander verbinden. Diese Verbindungsmöglichkeit besteht sowohl zwischen den einzelnen Faserlagen der MD-Gelege, aber ebenso zwischen den einzelnen MD-Gelegen soweit diese einzeln gewickelt und zu einem späteren Zeitpunkt übereinander gelegt werden. Soweit jedoch das vollständige Verstärkungsfasergelege in einem Arbeitsgang gewickelt wird, können jeweils die einzelnen Faserlagen in der vorgenannten Weise miteinander verbunden werden.

Die verwendeten Fasern bestehen vorzugsweise aus Karbon, ebenso können jedoch Glasfasern, aromatische Polyamidfaser, Polyesterfasern, Siliziumcarbitfasern, Basaltfasern, Polyethylenfasern oder Naturfasern, wie Hanf, Sisal, Kokos oder Flachs, verwendet werden.

Zur Herstellung der mehrlagigen Gelege, insbesondere des Verstärkungsfasergeleges ist eine Vorrichtung vorgesehen, bei der auf einer Transportvorrichtung, die sich in Längsrichtung kontinuierlich oder intermittierend vorwärts bewegt, eine Endlosbahn aus einem MD-Gelege mit wechselnden Ablegewinkeln der Fasern zur Flächenbildung aufeinander ablegbar ist. Die Vorrichtung besteht insofern aus einer Transportvorrichtung, auf der in Längsrichtung die multiaxialen Gelege in einer endlosen Bahn abgelegt werden können. Die Transporteinrichtung bewegt sich je nach Ablage- und Herstellfortschritt nicht kontinuierlich sondern intermittierend, wobei zunächst von einer Vorratsrolle ein erstes MD-Gelege auf die Transporteinrichtung in Förderrichtung abgelegt wird. Nach Erreichen einer definierten Transportlänge bleibt die Transportvorrichtung stehen und es wird von der Vorratsrolle ein weiteres MD-Gelege in einem Winkel, vorzugsweise von 45° (135°) dem Transportband zugeführt und auf das zuvor in Längsrichtung liegende MD-Gelege aufgelegt. Durch eine Zughalte-und Schneidevorrichtung entsteht eine abgelegte nun unter einen Winkel liegende Bahn aus einem MD-Gelege mit den in Transportrichtung liegenden Faserwinkeln von 0 oder 90°. Die Transporteinrichtung fährt anschließend die abgelegte querliegende Bahnbreite in Transportrichtung vorwärts und es wird überlappend in der vorgeschriebenen Art und Weise ein nächstes MD-Gelege aufgelegt. Somit liegen bereits zwei MD-Gelegebahnen vor. Über eine weitere Vorratsrolle kann in einem solchen Fall ein weiteres MD-Gelege hinzugefügt werden, falls gewünscht. Somit entstehen zweimal zwei, dreimal zwei oder viermal zwei MD-Gelegeanordnungen, die sich unter einem Winkel von + - 45°, 0°/90°, +-45° oder 0°/90°, + - 45°, 0°/90° und + - 45° erstrecken.

Mit Hilfe eines Kalanders, welcher eine Doppelwalze aufweist, oder ein Schluckband mit der Möglichkeit einer Wärmeeinwirkung erfolgt eine Fixierung der einzelne MD-Gelege zueinander, nach dem zuvor zwischen den einzelnen Lagen zum Beispiel ein Haftfadengitter, ein Sprühkleber, ein Klebevlies, ein Wirrfaserklebeflies oder ein Pulverkleber eingebracht worden ist. Die Doppelwalzen des Kalanders oder des Schluckbandes können hierbei so ausgelegt werden, dass sie den Abzug der MD-Gelege zu Unterstützung des weiteren Transportes ermöglichen.

Alternativ oder zusätzlich zur Verwendung eines Kalanders besteht die Möglichkeit mit Hilfe eines Nadelbalkens eine Anordnung der einzelnen Lagen miteinander zu vernähen, wobei je nach Verwendungszweck die Art der Vernähung vorbestimmt werden kann, beispielsweise auch mit einem 3-dimensional arbeitenden Nähkopf. Als Endprodukt wird ein mehrlagiges MD-Gelege, das sogenannte Verstärkungsfasergelege erzielt, welches in einfacher Form weiterverarbeitet werden kann und auf den Außenseiten und Innenseiten eine äußerst glatte und lückenlose Anordnung der Einzelfasem für alle Anwendungsbereiche der Industrie aufweist. Der besondere Vorteil dieser Fertigungsmöglichkeit besteht darin, dass das Endprodukt, und zwar das Verstärkungsfasergelege, mit relativ hoher Geschwindigkeit von >400 m/h hergestellt werden kann und deutlich zur Kostensenkung beiträgt. Hierbei ist im Weiteren darauf hinzuweisen, dass die angegebenen Gradzahlen von + -45° flexibel sind. Selbstverständlich sind andere Wickelwinkel möglich und es wird nur beispielsweise auf einen Winkel von + -45° hingewiesen.

Um ein Zerfasem der Ränder der so auf diese Weise hergestellten mehrlagige MD-Gelege zu vermeiden können randseitig in Längsrichtung verlaufende Randverstärkungen angebracht werden, Weiterhin können zusätzliche streifige Verklebungen oder ein Verschweißen mit einer entsprechenden Einrichtung randseitig erfolgen soweit dies zur weiteren Verarbeitung erforderlich ist.

In besonderer Ausgestaltung der Erfindung ist vorgesehen, dass die Transportvorrichtung eine doppelte Breite wie die einzelnen MD-Gelege aufweist und eine mehrfache Anordnung der MD-Gelege mit doppelter Breite und einer Überlappung in Längsrichtung erfolgen kann. Durch die doppelte Breite der Transportvorrichtung wird hierbei die Möglichkeit geschaffen, von den üblichen Standardmaßen der MD-Gelege abzuweichen und diese in mehrfacher Anordnung nebeneinander zu verwenden, sodass auch größere Flächengebilde für das erfindungsgemäße Verstärkungsfasergelege entstehen. Die Transportvorrichtung kann in diesem Fall in der Breite her an die Breite der MD-Gelege insoweit angepasst werden, dass beispielsweise zwei Gelege jeweils nebeneinander angeordnet werden. Selbstverständlich besteht auch die Möglichkeit mehr als zwei Gelege anzulegen, sofern geringere Breiten der MD-Gelege vorliegen.

Die Erfindung wird im Weiteren anhand der Figuren näher erläutert.

Es zeigt
- Fig. 1: in einer perspektivischen Ansicht ein einzelnes MD-Gelege,
- Fig. 2: in einer perspektivischen Ansicht ein Verstärkungsfasergelege aus beispielsweise drei MD-Gelegen und
- Fig. 3: in einer Seitenansicht die aus Figur 2 bekannte Anordnung eines Verstärkungsfasergeleges.

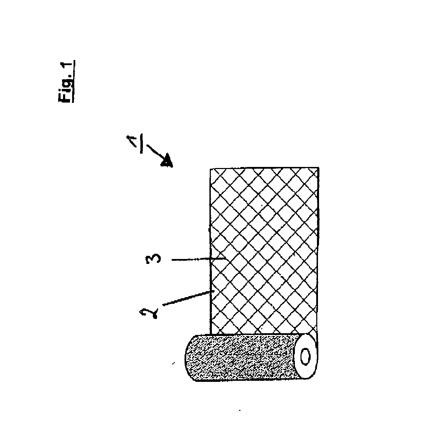

Figur 1 zeigt in einer perspektivischen Ansicht ein einzelnes MD-Gelege 1, welches aus zwei einzelnen Faserlagen 2, 3 besteht. Die einzelnen Faserlagern 2, 3 sind unter einem Winkel von annähernd 45° zueinander angeordnet, sodass ein rautenförmiges Muster entsteht. Die einzelnen Fasergelege 2, 3 sind hierbei durch Haftmittel miteinander verbunden und werden bei der Produktion beispielsweise durch einen Kalander geführt, sodass eine Verspressung der Fasergelege 2, 3 mit einer ausreichenden Fixierung der einzelnen Fasern erfolgt. In alternativer Ausführung kann zu einem solchen MD-Gelege 1 zusätzlich eine Faserlage unter einem Winkel von 0° hinzugefügt werden, sodass ein einzelnes MD-Gelege nicht nur aus zwei Fasergelegen 2, 3, sondern gegebenenfalls aus drei Fasergelegen besteht.

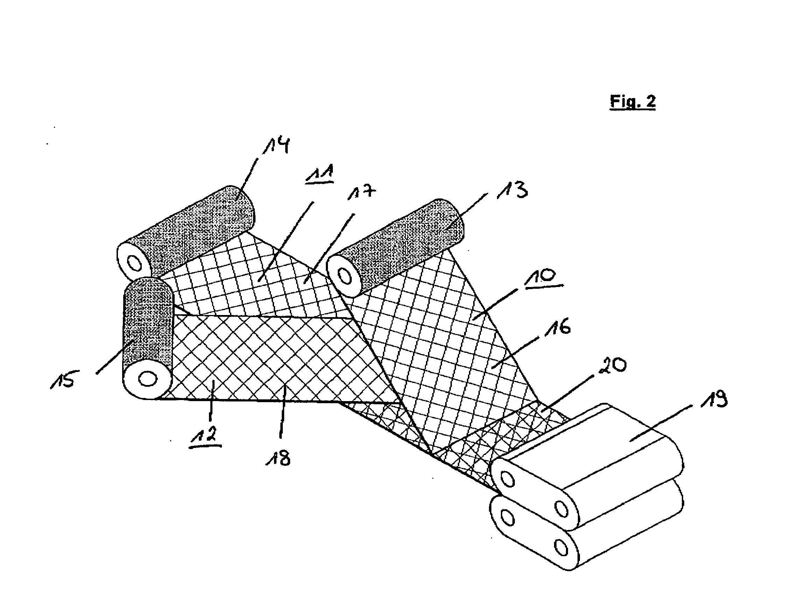

Figur 2 zeigt in einer perspektivischen Darstellung die Anordnung der einzelnen MD-Gelege zur Herstellung eines Verstärkungsfasergeleges 20. Zur Übersichtlichkeit sind nur die einzelnen MD-Gelege 10, 11, 12 in Form einer aufgewickelten Rolle 13, 14, 15 und einem abgewinkelten MD-Gelegeteilstück 16, 17 und 18 sowie eine Kalandriereinheit 19 dargestellt. Die Zuführung der einzelnen MD-Gelege 10, 11, 12 erfolgt hierbei unter einem Wickelwinkel, sodass sich die einzelnen Fasergelege der MD-Gelege 10,11,12 kreuzen. Im gezeigten Ausführungsbeispiel verläuft eine Lage des MD-Geleges 11 unmittelbar in Transportrichtung und hierzu wird ein zweites MD-Gelege 10 unter einem Winkel von annähernd 45° sowie ein drittes MD-Gelege 12 unter einem Winkel von annähernd -45° hinzugeführt. Erst die drei zusammengeführten MD-Gelege 10, 11, 12 führen zu dem Verstärkungslagergelege 20. Das Verstärkungsfasergelege 20 wird anschließend einer Kalandriereinheit 19 zugeführt, welche beispielsweise aus Kalanderwalzen oder einem Schluckband besteht. Mit Hilfe der Kalanderwalzen oder des Schluckbandes wird mit oder ohne Temperatureinwirkung eine Verbindung zwischen den einzelnen MD-Gelegen 10, 11, 12 durch dazwischen angeordnete Klebemittel hergestellt.

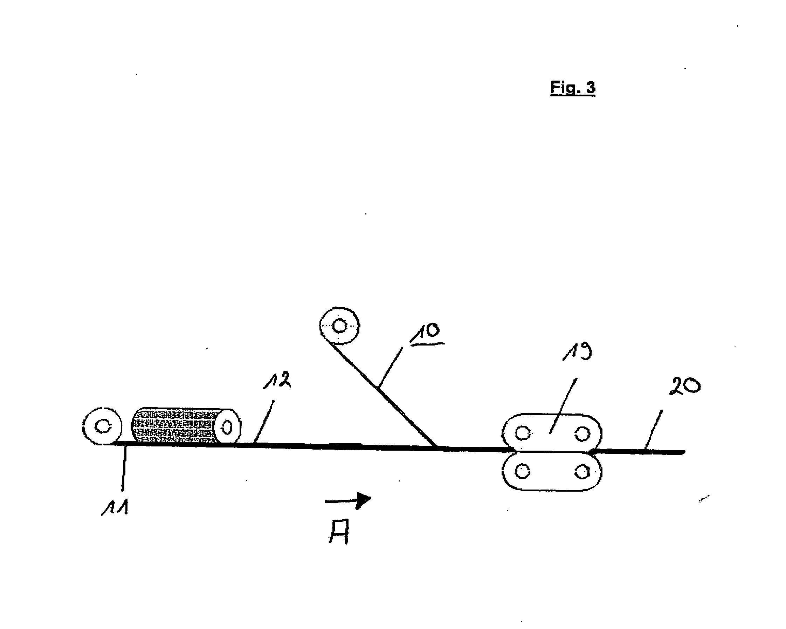

Figur 3 zeigt die aus Figur 2 bekannte Anordnung in einer Seitenansicht. Die drei MD-Gelege 10, 11, 12 werden hierbei unter einem Wickelwinkel zur Transportrichtung A zugeführt und letztendlich über eine Kalandriereinheit 19 zu einem Verstärkungsfasergelege 20 verpresst.

Alternativ besteht die Möglichkeit, ein Verstärkungsfasergelege 20 durch die Zuführung von zwei MD-Gelegen unter einem Wickelwinkel von +-45° oder von drei MD-Gelegen unter 0° und +- 45° herzustellen. Als weitere Alternative besteht die Möglichkeit, dass unterste MD-Gelege mit einem Zuführungswinke von 0°, einem zweiten MD-Gelege von +45°, einem weiteren MD-Gelege von 0° oder 90 ° und einem abschließenden MD-Gelege von -45° vorzusehen. Bei einer derartigen Anordnung weisen die oberen und unteren Lagen jeweils einen anderen Wickelwinkel auf, sodass im Anschluss mehrere dieser Verstärkungsfasergelege 20 übereinander gelegt werden können, ohne dass MD-Gelege mit gleicher Vorzugsrichtung aufeinander zu liegen kommen.

### Bezugszeichenliste

- 1: MD-Gelege
- 2: Faserlage
- 3: Faserlage
- 9: Kalandriereinheit
- 10: MD-Gelege
- 11: MD-Gelege
- 12: MD-Gelege
- 13: Rolle
- 14: Rolle
- 15: Rolle
- 16: MD-Gelegeteilstück
- 17: MD-Gelegeteilstück
- 18: MD-Gelegeteilstück
- 19: Kalandriereinheit
- 20: Verstärkungsfasergelege

- A: Transporteinrichtung

## Patentansprüche

1. Verstärkungsfasergelege (20), bestehend aus mehrlagigen MD-Gelegen (Multiaxial-Gelege; 10, 11, 12), welche jeweils aus einzelnen nebeneinander angeordneten Fasern in einer Lage bestehen, wobei zumindest zwei Lagen einen Winkel zueinander in der Lagenebene aufweisen und mit einem Fixiermittel verbunden sind,
**dadurch gekennzeichnet,**
**dass** zumindest zwei vorgefertigte MD-Gelege (10, 11, 12) unter einem Winkel in der Lagenebene zueinander angeordnet und miteinander verbunden sind.

2. Verstärkungsfasergelege (20) nach Anspruch 1,
**dadurch gekennzeichnet,**
**dass** zwei, drei oder vier MD-Gelege (10, 11, 12) übereinander liegend miteinander verbunden sind.

3. Verstärkungsfasergelege (20) nach Anspruch 1 oder 2,
**dadurch gekennzeichnet,**
**dass** die einzelnen MD-Gelege (10, 11, 12) unter einem Winkel von jeweils 45° aufeinander liegen.

4. Verstärkungsfasergelege (20) nach einem der Ansprüche 1, 2 oder 3,
**dadurch gekennzeichnet,**
**dass** die einzelnen Faserlagen der MD-Gelege (10, 11, 12) einen Winkel von + - 45° und/oder 0°/90° zur Längserstreckung des MD-Geleges (10, 11, 12) aufweisen.

5. Verstärkungsfasergelege (20) nach einem der Ansprüche 1 bis 4,
**dadurch gekennzeichnet,**
**dass** die Faserlagen der MD-Gelege (10, 11, 12) aus parallelen lückenlos angeordneten Einzelfasern bestehen, welche zueinander durch ein Haftfadengitter, Sprühkleber, Pulverkleber, warmklebend oder warmschmelzend, verbunden sind, oder miteinander vernäht sind.

6. Verstärkungsfasergelege (20) nach einem der Ansprüche 1 bis 5,
**dadurch gekennzeichnet,**
**dass** die MD-Gelege (10, 11, 12) durch ein Haftfadengitter, einen Sprühkleber, ein Klebevlies, ein Wirrfaserklebevlies oder ein Pulverkleber, warmklebend oder warmschmelzend verbunden oder miteinander vernäht sind.

7. Verstärkungsfasergelege (20) nach einem der Ansprüche 1 bis 6,
**dadurch gekennzeichnet,**
**dass** die Fasern aus Karbon, Glas, aromatischen Polyamit, Polyester, Siliziumcarbit, Basalt, Polyethylon oder aus Naturfasern, wie Hanf, Sisal, Kokos oder Flachs bestehen.

8. Vorrichtung zur Anwendung eines Verfahrens nach einem oder mehreren der vorgenannten Ansprüche 1 bis 7 zur Herstellung eines Verstärkungsfasergeleges (20) aus mehreren MD-Gelegen (10, 11, 12),
**dadurch gekennzeichnet,**
**dass** auf einer Transportvorrichtung, die sich in längsrichtung kontinuierlich oder intermittierend vorwärts bewegt, eine Endlosbahn aus einem MD-Gelege (10, 11, 12) mit wechselnden Längsausrichtungen der Fasern zur Flächenbildung aufeinander ablegbar ist.

9. Vorrichtung nach Anspruch 8,
**dadurch gekennzeichnet,**
**dass** die Zuführung der MD-Gelege (10, 11, 12) unter einem Winkel zur Transportrichtung (A) variabel einstellbar ist.

10. Vorrichtung nach Anspruch 8 oder 9,
**dadurch gekennzeichnet,**
**dass** die Zuführung der MD-Gelege (10, 11, 12) unter einem Winkel von + - 45° und/oder 0°/90° erfolgt, wobei die einzelnen MD-Gelege (10, 11, 12) ihrerseits aus einzelnen Faserlagen besteht, welche zueinander einen Winkel von + - 45° oder 0° und + - 45° aufweisen.

11. Vorrichtung nach Anspruch 8, 9 oder 10,
**dadurch gekennzeichnet,**
**dass** dle Zuführung der MD-Gelege (10, 11, 12) unter einem Winkel von + - 45° gegenüber der Transportrichtung (A) und einer Mittellage aus MD-Gelege (10, 11, 12) erfolgt.

12. Vorrichtung nach einem der Ansprüche 8 bis 11,
**dadurch gekennzeichnet,**
**dass** die Transportvorrichtung eine doppelte Breite wie die einzelnen MD-Gelege (10, 11, 12) aufweist und eine mehrfache Anordnung der MD-Gelege (10, 11, 12) mit doppelter Breite und einer Überlappung in Längsrichtung erfolgt.

13. Vorrichtung nach einem Ansprüche 8 bis 12,
**dadurch gekennzeichnet,**
**dass** die Transportvorrichtung an die Breite der MD-Gelege (10, 11, 12) anpassbar ausgeführt ist.

14. Vorrichtung nach einem der Ansprüche 8 bis 13,
**dadurch gekennzeichnet,**
**dass** diese endseitig mit einer Kalandriereinheit (19) und/oder einer Nähvorrichtung ausgestattet ist.
